# EUROPEAN PATENT APPLICATION

(11) **EP 3 479 992 A1**
(43) Date of publication of application: **08.05.2019**
(21) Application number: 17199513.7
(22) Date of filing: 01.11.2017
(51) Int. Cl.: B29C 47/10, B29C 47/00, B29B 13/02, B29B 17/00

(54) **DEVICE AND METHOD FOR RECYCLING PLASTIC MATERIALS**

(71) Applicant: Haute Ecole d'Ingénierie et de Gestion du Canton de Vaud (HEIG-VD), 1401 Yverdon-les-bains (CH)
(72) Inventor: PALTENGHI, Frédéric, 1660 Château-d'Oex (CH)
(74) Representative: Schneiter, Sorin

(57) **Abstract**

The application relates to a device adapted for domestic and/or office use for producing a filament suitable for 3D printing from recyclable plastic materials, the device comprising:
- a funnel,
- one or more first heating elements connected to said funnel for heating and liquefying a recyclable plastic material contained in said funnel,
- an extruder comprising: a tube, a screw arranged in said tube, and a nozzle where extruded material produced from said recyclable plastic material can exit said extruder, said tube comprising an opening in communication with said funnel for receiving liquefied plastic material,
- a motor for driving said screw,
- one or more second heating elements connected to said tube for heating said plastic material in said tube

as well as to a corresponding method.

## Description

### Technical Field

The present invention relates to a device and a method for treating and/or recycling thermoplastic materials, such as PET, PE, PLA, ABS, PEEK and other materials. In other aspects, the present invention relates to the extrusion of thermoplastic materials. In other aspects, the invention relates to a device for controlling the thickness of an extruded thermoplastic material.

### Background Art and Problems Solved by the Invention

The treatment and recycling of used plastic materials is a fundamental aspect of waste management. In the art, several apparatuses related to transforming plastic materials, such as PET bottles in a re-usable form of plastic have been developed.

For example US2015/0023742 discloses a device for feeding granulate and filler material to an extruder screw of an extruder. As the title indicates, the teaching of this document requires that the plastic materials be in a granulate form. Consequently, this device is not suitable to treat non-ground or non-granulater materials. Furthermore, materials that cannot be granulated, such as plastic bags made from thin, film or flexible plastics, which cannot be granulated cannot be extruded by way of this device.

US 2015/0064297 discloses a device equipped with a vacuum pump for reducing moisture in the plastic material. This document uses mechanical forces of the extruder or of a force feed screw for heating and transporting the plastic materials.

CN105216326 discloses a production facility for producing 3D printing supply PLA wire from PLA particles. This document teaches the use of a flexibilizer to be mixed with the particles. The thermoplastic material is heated through the rotation of the screw to be forced through an extrusion dye.

On the market there are available small-scale extruders that can be used at home or in the office for recycling plastic materials. The currently available devices suffer several drawbacks. One of these drawbacks is that the currently available devices comprise a grinder for diminishing the plastic objects such as PET bottles to form a granulate that can then be guided to the extruder. Such grinding is necessary since, in contrast to industrial scale installations, small-scale extruders cannot receive entire PET bottles. Indeed, such extruders may have a diameter of 1 to 5 cm, and are adapted to receive the recycled plastic in form of pellets, for example. The use of the grinder entails another disadvantage, since such grinders are not adapted to receive all forms of plastic. For example, soft plastic materials and plastic bags cannot be recycled, because these plastic materials typically obstruct the grinder.

The present invention addresses the problem of providing a device for treating plastic materials, wherein the device is suitable for use at home or in the office. The invention thus addresses the problem of providing a small- or home-scale device for recycling plastic materials.

The present further addresses the problem of providing a device for treating all sorts of plastic materials, soft, flexible or thin plastics, including plastic films and plastic bags, for example.

The present further addresses the problem of obstruction of grinders currently used in commercially available devices. It is an objective of the invention to provide a device that lacks a grinder and is nevertheless suitable to treat plastic materials.

It is an objective of the invention to provide a device suitable for treating plastic materials that have not been diminished, that do not require diminishing and that are not provided in the form of granules, even in the case of a small-scale device.

It is an objective of the invention to provide a solution that can also be up-scaled to an industrial scale, semi-industrial and/or pilot-plant scale, for example, and which is not limited to home- or office applications.

It is an objective of the invention to recycle plastic materials, in particular to produce a useful product from recycled plastic material. It is an objective to produce a usable product from used plastics, such as PET bottles and the like.

Another problem underlying the present invention is to provide a filament suitable for 3D printing, in particular from used and/or recycled plastic materials.

It is an objective of the invention to produce a filament from used plastics, wherein such filament has desired properties, in particular a desired filament thickness. It is an objective of the invention to provide a device suitable for adjusting the thickness of a filament of extruded thermoplastic material, for example from recycled plastic materials.

The present invention addresses the problems depicted above.

### Summary of the Invention

Remarkably, the present inventor provides a device that is suitable to treat plastic materials, including used plastic materials, such as PET bottles and plastic films or bags. In a preferred embodiment, the device lacks a grinder, slasher or mulcher and does not require the use of granulate plastics. The device is suitable for use at home or in the office, but can also be adapted to larger scale, in particular industrial scale. Furthermore, the inventor provides a device for producing filament suitable for 3D printing, in particular from used plastics. The invention also provides a device for adjusting the thickness of a filament of extruded plastic material.

In an aspect, the present invention provides a device for treating thermoplastic and/or recyclable plastic materials, the device comprising a funnel and/or hopper, an extruder comprising: a tube, a screw arranged in said tube, and a nozzle where extruded material produced from said recyclable plastic material exits said extruder, said tube comprising an opening in communication with said funnel and/or hopper for receiving plastic material, a motor for driving said screw, and one or more heating elements for heating said plastic material in said hopper and/or in said tube.

In an aspect, the present invention provides a device for treating thermoplastic and/or recyclable plastic materials, the device comprising a funnel and/or hopper, an extruder comprising: a tube, a screw arranged in said tube, and a nozzle where extruded material produced from said recyclable plastic material exits said extruder, said tube comprising an opening in communication with said funnel and/or hopper for receiving plastic material, a motor for driving said screw, one or more heating elements connected to said tube for heating said plastic material in said tube, wherein said device comprises one or more heating elements in contact with said funnel and/or hopper or with an intermediate chamber that is optionally arranged between said funnel and/or hopper and said extruder, said heating element being arranged so as to heat and liquefy a plastic material contained in said funnel and/or hopper and/or in said intermediate chamber.

In an aspect, the present invention provides a device for producing a filament suitable for 3D printing from recyclable plastic materials, the device comprising a funnel and/or hopper, one or more first heating elements connected to said funnel and/or hopper for heating and liquefying a recyclable plastic material contained in said funnel and/or hopper, an extruder comprising: a tube, a screw arranged in said tube, and a nozzle where extruded material produced from said recyclable plastic material exits said extruder, said tube comprising an opening in communication with said funnel and/or hopper for receiving liquefied plastic material, a motor for driving said screw, one or more second heating elements connected to said tube for heating said plastic material in said tube. In an embodiment, said device is adapted for domestic and/or office use.

In an aspect, the present invention provides a method for treating recyclable and/or thermoplastic plastic materials, the method comprising: providing a recipient for receiving the plastic material; heating and liquefying said plastic material so as to obtain a liquefied plastic material; and, extruding said liquefied plastic material through said extruder.

In an aspect, the present invention relates to an industrial device and/or method form treating and/or recycling plastic materials.

In an aspect, the present invention provides a method for treating recyclable and/or thermoplastic plastic materials, the method comprising: providing a recipient for receiving the plastic material; heating and liquefying said plastic material so as to obtain a liquefied plastic material; allowing said liquefied plastic material to enter an extruder; and, extruding said liquefied plastic material through said extruder.

In an aspect, the present invention provides a method for producing a filament suitable for 3D printing from recyclable plastic materials, the method comprising: providing a recipient for receiving recyclable plastic material; heating and liquefying said recyclable plastic material so as to obtain a liquefied plastic material; allowing said liquefied plastic material to enter an extruder; extruding said liquefied plastic material through said extruder so as to obtain extruded plastic material; and, forming a filament from said extruded material.

In an aspect, the present invention provides a device for adjusting and/or controlling the thickness of extruded plastic filament produced from recyclable and/or thermoplastic plastic, the device being configured to apply a traction on said extruded material so as to form a filament having a desired thickness.

In an aspect, the present invention provides a device for adjusting and/or controlling the thickness of extruded plastic rod or filament, the device being configured to apply a traction on said extruded material so as to form a rod or filament having a desired thickness. In a preferred embodiment, the extruded plastic filament is suitable for 3D printing.

Further aspects and preferred embodiments of the invention are defined herein below and in the appended claims.

Further features and advantages of the invention will become apparent to the skilled person from the description of the preferred embodiments given below. These embodiments are provided by way of examples and the present invention is not intended to be limited to the particular embodiments as illustrated in the figures.

### Brief Description of the Drawings

**Figure 1** is a schematic drawing showing a side view of a device in accordance with an embodiment of the present invention.
**Figure 2** illustrates exemplary heating zones in the device shown in Figure 1.
**Figure 3** is a more detailed technical drawing of a second embodiment of the invention, with some structural elements being shown in section.
**Figure 4** is a front view of the embodiment shown in Figure 3, with again some structural elements being shown in section.
**Figure 5** is a top down view of the device according to the embodiment shown in Figures 3 and 4, in which a top lid has been removed.
**Figure 6** is a closer view to the top assembly comprising a filter of an embodiment of the device on the invention.
**Figure 7** is a schematic drawing of a filament control entity, which can be used in the device of the invention for controlling the thickness of a filament produced by the device.
**Figure 8** is a technical drawing of a sensor arrangement for determining the thickness of an extruded material, which may be used with the filament control entity shown in Figure 7.

### Detailed Description of the Preferred Embodiments

The present invention relates to a device for treating a plastic material, in particular a thermoplastic plastic material. The device and method are intended for the recycling of used plastic materials. Therefore, the device and method may be used for treating recyclable plastic materials. Typically, such plastic materials may be selected from PET (polyethylene terephthalate), PE (polyethylene), or other thermoplastics such as PLA (polylactic acid), ABS (acrylonitrile butadiene styrene), PEEK (polyether ether ketone), plastic materials comprising one or more of the aforementioned, and combinations thereof, just to mention a few examples. In general, the present invention allows treating all thermosoftening plastics (thermoplastics) of any form. In an embodiment, said recyclable plastic materials includes plastic bags, for example plastic bags produced from polyethylene (PE).

For the purpose of the present specification, the term "comprising" and its various grammatical forms are intended to mean "includes, amongst others". It is not intended to mean "consists only of".

The device and method of the present invention are suitable to transform used plastic materials into a form that allows reuse of the thermoplastic. Therefore, the present invention is also concerned with recycling of thermoplastics. The present invention is not limited to the treatment of used plastics but may also be operated with non-used thermoplastics.

In a preferred embodiment, the device and method of the invention are for producing a filament suitable for 3D printing.

The embodiment shown in the figures is adapted for a small-scale use. It may be powered by conventional electric power supply and has a size that allows it to be placed on a table in an office, at home, in a workshop or studio. In an embodiment, the device of the invention is directly associated with a 3D printer, for example integrated in a 3D printer, such that the recycled plastic material can be directly used to supply thermoplastic material to the 3D printer for printing.

Conventional electric power supply is preferably 220-240V at 50Hz and/or 110-120V at 60Hz, for example. Preferably, de device of the invention may be used with such power supply, possible in connection with an appropriate transformer.

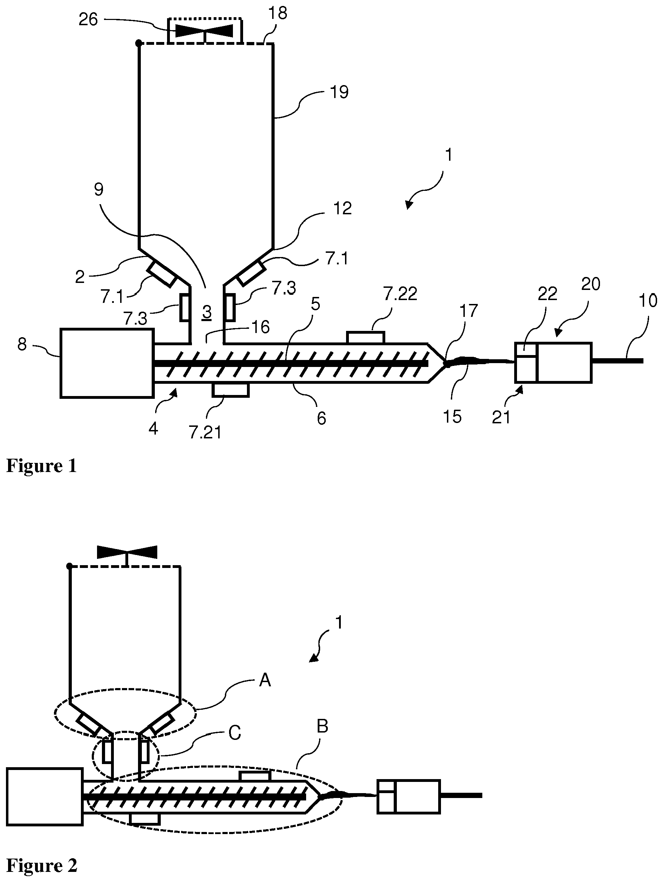

As shown in **Figure 1****,** the device 1 preferably comprises a recipient 19 the bottom of which merges with or is connected to top opening 12 of a funnel 2. The recipient and funnel form a hopper for receiving the plastic material to be treated and guiding it towards the extruder 4.

Typically, if the device is used for small scale use, the dimensions of the recipient 19 is preferably adjusted so as to be capable of receiving an entire, non-disintegrated PET bottle, for example a 0.5L, more preferably a 1.5L and even a 2L PET bottle. In other embodiments, the concept of the invention is used for larger scale, in which case the dimension of the hopper 2, 19 is larger and no longer suitable for being placed on an office desk, for example.

The device shown in Figure 1 comprises a lid 18 for closing the recipient. The lid comprises a filter (shown as a dotted line in Fig. 1). A fan 26 is connected to the lid or near the top opening of the recipient 19, arranged for causing air and gases generated in the recipient to move towards the filter. The filter in the lid maybe an active carbon filter, for example. Preferably, the filter is provided in the lid or constitutes the lid such that gas may pass across the lid 18.

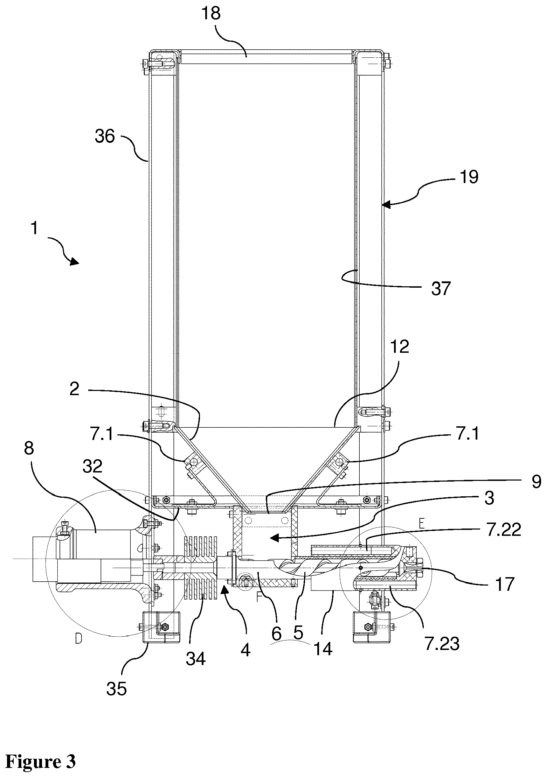

In the device shown in Figure 1, one or more heating elements 7.1 are provided on the outer side of the funnel 2, in such manner that the inside of the funnel 2 is heated by way of said heating elements. In a preferred embodiment as shown if Figs 3-4, four (4) heating cartridges are arranged on the four side walls of the funnel.

The funnel 2 shown in Figure 1 comprises a bottom opening 9, where the funnel 2 is in communication with, preferably connected to, an intermediate chamber 3.

In a preferred embodiment, the intermediate chamber 3 is vertically below the funnel 2 and/or the opening 9 of the latter. In a preferred embodiment, one or more heating elements 7.3 are in contact with said intermediate chamber 3 for heating and/or maintaining an elevated temperature of said recyclable plastic material in said intermediate chamber 3.

For example, the walls of the chamber 3 are made from metallic material, such as aluminum, inox or steel. The heating elements 7.3 are preferably attached to or in contact with the outer side of the chambers wall, such that the heat they produce heats said walls and consequently the inside of the chamber 3.

At the bottom of the intermediate chamber 3, the latter is connected to an extruder 4. The extruder 4 comprises a tube or hollow cylinder 6, in which an extruder-screw 5 is housed. The tube 6 comprises an opening 16, preferably on an upper side of the tube, and the chamber 3 is open to the inside of the tube 6 at said opening 16. Therefore, the hopper or funnel 2 is in communication with the extruder 4, preferably via a channel provided by said intermediate chamber 3. Preferably, the opening 16 is provided proximate a first extremity of the extruder or screw, preferably proximate the extremity where the screw 5 is connected to the motor 4.

In a preferred embodiment, the device 1 comprises an intermediate chamber 3 arranged between said funnel 2 and said opening 16 provided in said tube 4, wherein said intermediate chamber 3 provides a channel for liquefied recyclable plastic material.

Preferably, the bottom opening 9 of the funnel 2 is positioned vertically above said extruder 4 and in particular vertically above said opening 16 in said tube 6, such that a liquefied plastic material is conducted to enter said extruder 4 through said opening 16 by the force of gravity.

In some embodiments, the intermediate chamber 3 is absent, and the opening 9 in the funnel 2 directly discharges into the opening 16 of the extruder 4.

Whether the intermediate chamber 3 is present or absent, the device of the invention preferably comprises heating elements 7.1, 7.3, 7.21, 7.22 arranged so as to keep said plastic material in a liquefied state from said funnel 2 to said extruder 4.

The device of Figure 1 further comprises a motor 8 for driving the screw 5 of the extruder.

One or more heating elements 7.21 and 7.22 are provided so as to heat the inside of the extruder 4. These heating elements may be provided so as to be in contact with the tube 6 of the extruder, for example on the outside surface of the tube 6. The tube 6, as well as funnel 2, are preferably made from metal, such as aluminum, inox and iron, for example, such that the heat generated by the one or more heaters are is transferred to the inside of the extruder.

In a preferred embodiment, the heating elements 7.1, 7.3, 7.21 and 7.22 are powered by electricity. The same preferably applies to the motor 8, and also to the fan 26. This applies in particular where the device is a small-scale device for home or office use, as described above.

The extruder 4 comprises a nozzle 17 through which the thermoplastic material is extruded so as to provide an extruded material 15. The nozzle 17 is preferably provided at or proximate a second extremity of the extruder 4 and/or screw 5, preferably opposed to the first extremity where the opening 16 is provided or where the screw is connected with the motor 8.

In an embodiment, the device of the present invention comprises a filament transporting entity or device 20. The entity 20 is preferably suitable for adjusting the thickness of extruded plastic material 15.

The device 20 is in particular capable of producing a plastic filament 10 of a desired thickness from said extruded material 15. The device 20 is preferably arranged to receive an extruded material or rod 15 that exits the extruder 4 and configured to apply a traction on said extruded material 15, so as to form a filament 10 having a desired thickness. Preferably, said traction depends of the thickness of an extruded rod 15 proximate or downstream the nozzle 17 and/or upstream and/or proximate the device 20. By adjusting the traction exerted on the extruded rod 15, a filament 20 having a desired thickness is obtained. The thickness-adjusting device 15 will be described in more detail further below.

The device 1 preferably comprises one or more heating elements 7.1, 7.3, 7.21 and 7.22, which heating elements are provided at distinct places on the device. In particular, in contrast to prior art devices, the heating elements are not solely provided on the extruder, in particular, the heating elements are not only provided proximate or at a distal end of the extruder, close to the nozzle 17. In the present specification, the heating elements 7.1 provided at said funnel 2 may be referred to as first heating elements, the heating elements 7.21, 7.22 provided on the extruder may be referred to as second heating elements, and the heating elements provided on the intermediate chamber 3 may be referred to as third heating elements.

As shown in Figure 2, the device of the invention preferably comprises a first heating zone or area A, which is associated with funnel 2, a second heating zone B associated with the extruder 4, and an optional third heating zone C associated with the intermediate chamber 3. The third heating zone is optional because the chamber 3 is optional.

**Figures 3****,** **4** and **5** shows a device in accordance with an embodiment, in which the same structural parts have the same reference in accordance with the schematic drawing of Figure 1. These parts are not discussed anew.

In Fig. 3-5, the device is shown to comprise four legs 35. Each leg 35 forms the support of a vertical profile or strut 36, which in the embodiment shown is an L profile. Structural parts of the device, such as motor 8, platform 32 and the walls 33, 37 of the recipient 19 are fixed on said four struts 36.

In Fig. 3, part of the wall of the tube 6 of the extruder 4 is removed, so that screw 5 inside the tube can be seen.

Furthermore, in an embodiment, the device 1 comprises a cooling radiator 34. An exemplary radiator 34 is visible in Fig. 3. The radiator has the purpose of protecting the motor from the heat generated in the various heating elements, such as the heating elements 7.22 and 7.23 provided on the extruder 4 and the heating elements 7.3 for heating the intermediary chamber 3, for example.

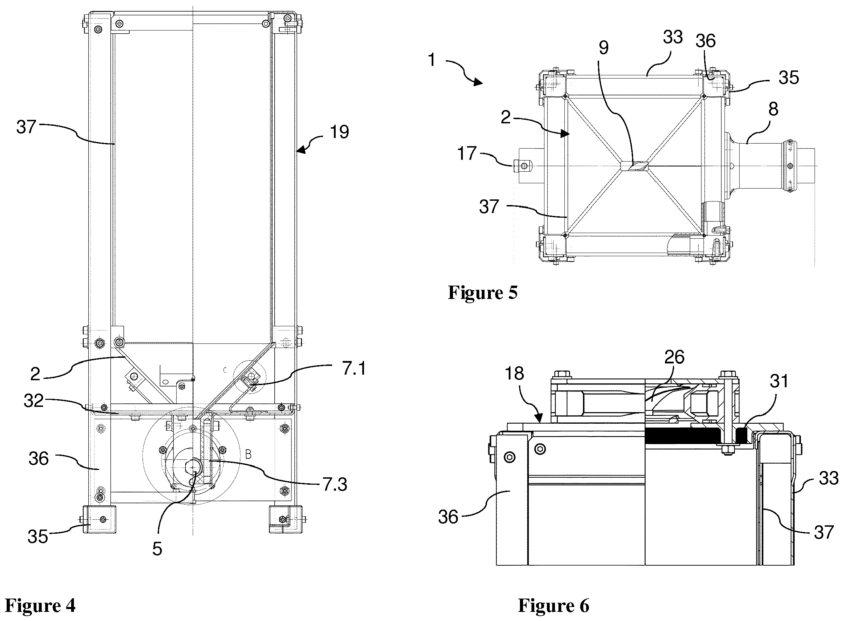

In the embodiment shown in Figs. 3-4, four separate heaters or heating cartridges 7.1 are provided so as to heat funnel 2. As can be seen from Fig 5, the funnel 2 comprises 4 substantially triangular and/or trapezoidal side walls, arranged so as to leave the opening 9 in the center. Figs 3 and 4 show that the four first heating elements 7.1 are in contact with the bottom and/or external surfaces of each of the walls of the funnel 2. In the embodiment shown, the first heating elements are further attached to the platform 32 by way of holders.

The heating element 7.3 of the intermediate chamber is visible in Fig. 4, in particular in the part shown in section. In the embodiment shown, two longitudinal heating cartridges 7.3 are housed in bores provided in the side walls of the intermediate chamber 3.

As visible in Fig. 3, heating elements 7.22 and 7.23 for heating the extruder 4 are provided in a tubular jacket that is put over extruder. The jacket is provided close to the nozzle 17 of the extruder, but extends along the extruder close to where the extruder is connected with the intermediate chamber 3. As can be seen from Fig. 4, the lateral heating cartridges 7.3 heat not only the intermediate chamber 3, but also the extruder 4 in this zone, because the cartridge 7.3 extends down to the level of the extruder 4. Accordingly, heating elements 7.3 are arranged to heat zone C in Fig. 2 but also part of zone B, namely the area where the intermediate chamber C communicates with the extruder 4. One may say that heating element 7.21 shown in Fig. 1 corresponds the the bottom part of the heating element 7.3 in Fig. 4.

From Figs 3-5 it can further be seen that the recipient 19 of the exemplary device shown comprises two external walls, an inner wall 37 and an outer wall 33. The advantage of providing a double-walled recipient 19 is that heat is better retained inside the recipient, and the outside of the device remains less heated. The invention encompasses the use of insulating material instead of or in addition to a second or outer wall 33, in order to heat-insulate the recipient 19. For example, insulating material may be provided in the space between the inner and outer walls, and/or on the outer surface of the inner wall 37.

From Fig. 5 it can be understood that the overall rectangular and longitudinal recipient 19 of the device 1 has a substantially square cross-section. In the embodiment shown, the cross-section of the inside of the recipient is such that a 1.5L PET bottle can be placed in the recipient 19. In other embodiments, the recipient may have circular cross-sections. Other cross-sections may also be used. In general, the shape of the recipient 19 may be adapted to the form of a particular plastic material to be recycled.

**Figure 6** shows a venting arrangement 26, 31 provided on the lid 18 in accordance with an embodiment of the invention. The venting arrangement has been omitted from Figs 3-5, but may be used in combination with the embodiment shown in these figures.

In Fig. 6, an active carbon filter 31 is shown in black and is arranged in the lid. The fan 26 is arranged such that it can cause air to move from the inside of the recipient 19 to the outside while passing through filter 31. The lid is provided such that it allows the air in the recipient pass through filter 31 and get to the outside of the device. The fan and filter arrangement 26, 31 makes sure that possibly undesirous volatile compounds that are set free by the melting of the plastic material is filtered and does not pollute the environment of the device. The device may also be used with other filters and may comprise several filters, or no filter at all. For domestic or office applications, the presence of a filter is preferred.

Hereinafter, the general operation of the device and the method of the invention will be described. When a plastic object, such as a PET bottle, is placed in recipient 19 and the device is started, heating elements 7.1 will heat the funnel 2 to a particular temperature that is suitable to liquefy and/or melt the plastic material, in this case the PET bottle. Being liquefied, the plastic material will flow from the funnel 2 through the bottom funnel opening 9 towards the intermediate chamber 3, and from there towards the extruder 4. Since the funnel 2 and in particular its opening 9 is vertically above the chamber 3, and the latter vertically above the opening 16 on the top side of the extruder, the liquefied material will flow into the extruder. The third heating elements 7.3 are arranged for keeping the temperature in the intermediate chamber at a desired value, such that the thermoplastic material remans in a liquid state. In accordance with the invention, the recyclable plastic material is liquefied in said recipient 19 and/or funnel 2.

It is noted that the intermediate chamber preferably has a buffering purpose. The intermediate chamber may help regulating the flow rate of plastic material into the extruder 4. In particular, the presence of an intermediate chamber 3 may help adjusting the flow rate to a more constant value, as it may retain molten material that has not yet entered the extruder. It is possible to start the screw 5 of the extruder only once a given amount of molten plastic material is present in the intermediate chamber 3. Preferably, the extruder is started when an operation temperature is reached, and/or after an initial preheating step.

Further heating elements, in particular the second heating elements 7.21 and 7.22 are arranged so as to keep the temperature at a desired value within the extruder 4, such that the plastic material will stay liquid when entering the extruder at opening 16. Through the rotation of the screw 5 by motor 8, the molten plastic will be mixed by the extruder and transported to nozzle 17, where the plastic material is forced through so as to exit the extruder and provide an extruded rod 15 of thermoplastic material. When exiting the extruder, the temperature of the plastic material is still above room temperature (25°C), but will eventually cool down and solidify due to exposure to ambient or room temperature. Before solidification, the thickness of the extruded rod may be adjusted, so as to produce a filament of thermoplastic material having a desired thickness. For example, a thickness that may render the filament 20 useful for 3D printing may be adjusted, as disclosed elsewhere in this specification.

In a preferred embodiment, the device of the invention lacks a grinding or crushing unit for grinding or crushing recyclable plastic materials before it enters said extruder 4. Similarly, the method of the invention preferably lacks a step of grinding and/or crushing recyclable plastic material. In particular, such a step is absent after the plastic material is received in said recipient 19 or in said funnel 2. Such a step is preferably absent downstream the recipient or funnel in which a plastic material to be recycled is placed by a user. The invention does not exclude, however, that a user places previously crushed or ground plastic material, for example pellets, into the hopper 2, 19. The device of the invention may also treat granulate, for example crushed or ground plastic material.

In accordance with the concept of the invention, the thermoplastic material placed in the recipient 19 is heated and liquefied. In an embodiment, the method of the invention comprises allowing said liquefied plastic material to enter said extruder, wherein said liquefied plastic material is transported under the force of gravity and/or enters said extruder due to the force of gravity. Preferably, the method of the invention lacks a step of actively transporting liquefied plastic material to said extruder 4, and the device lacks a motor or unit, such as a propelled transporting unit for actively transporting said liquefied material to the extruder.

It has been mentioned that the walls, parts and/or surfaces of the device may comprise or be made from metal or metal alloys, such as aluminum, iron, steel, inox, for example. Aluminum is a preferred material for one or more selected from the recipient 19, the funnel 2, the intermediate chamber 3 and the tube 6 of the extruder, in particular the inner surfaces of one or more of these parts. The "inner surface" preferably is the surface of a part, wall or structural element of the device that gets in contact with the plastic material to be recycled and placed into the hopper 2, 19, including in particular liquefied plastic material.

In a preferred embodiment, one, several or all surfaces of the device are surface treated and/or coated. Preferably, these surfaces comprise a coating. In particular, one, several or all inner surfaces of the device designed to be in contact with plastic material, in particular liquefied plastic material, are surface treated and/or coated. The surface treatment and/or coating is preferably selected so as to reduce the friction and facilitate the movement of the liquefied plastic material when in contact with said surfaces, for example where said movement is driven by gravity. Exemplary surface treatments or coatings are Polytetrafluoroethylene (PTFE) (Teflon®) coatings, coatings comprising chrome, nickel and/or alloys comprising one or both of the aforementioned, nickel-phosphor alloys, just to mention examples. Such coatings may be deposited chemically, electrochemically or physically, for example. After deposition of a coating, the walls, parts and or surfaces may be subjected to a heat treatment and/or sintering, if this is advantageous. The purpose of the coating is generally to reduce the coefficient of friction of the surface containing the coating. Preferably, the coating is selected so as to endure increased temperature in the device during heating. Preferably, one or more of the pieces or surfaces that is heated by a heating element comprises a surface that is treated and/or that comprises a coating.

The surface treatment and/or coating preferably allows the liquefied material to move under the force of gravity from the funnel 2 through the intermediate chamber 3 into the extruder 4.

Preferably, part or all of the surfaces of the funnel 2, in particular part or all of the inner surfaces of the funnel 2, are coated and/or surface treated, for example as described above.

Preferably, part or all of the surfaces of the intermediate chamber 3, in particular part or all of the inner surfaces of the intermediate chamber 4, are coated and/or surface treated, for example as described above.

Preferably, part or all of the surfaces of the tube 6, in particular part or all of the inner surface of the tube 6, is coated and/or surface treated, for example as described above.

In an embodiment, the coating has a thickness of 0.05-100µm, preferably 0.1-50 µm, and most preferably 1-10µm.

During the operation of the device, the inner surfaces of the funnel 2, the intermediate chamber 3 (in as far as present) and of the tube 6 of the extruder are generally exposed to liquefied plastic material. The surface treatment/coating preferably reduces the coefficient of friction and thereby allows the movement of the liquefied material by gravity and preferably also facilitates the movement in the extruder driven by the screw 5. The coating and/or surface treatment preferably avoids or reduces sticking of the liquefied material to the surfaces with which it gets in contact.

In an embodiment, some surfaces of the walls, parts and surfaces of the device are physically surface treated, for example in order to render the surface smoother and/or remove surface irregularities. In an embodiment, inner surfaces, such as those mentioned above, are polished or machined for example before the application of a coating and/or surface treatment.

As can be understood from the above, a grinding unit is not necessary, as the molten thermoplastics can be received and processed as such by the extruder. It is noted that when a larger object, for example a large PET bottle, is placed into the recipient 19, the larger object will start melting where it is proximate the funnel 2, while staying still solid and with the original shape towards the top opening of the recipient. The larger plastic object will thus melt down in a continuous, gradual manner, with the melting of the lower parts of the object in the funnel causing the upper, still solid part of the object to gradually lower and approach the funnel, until eventually the entire object has molten. If one were to interrupt the process (switch off the device) before an entire PET bottle, for example, has molten, the partially molten parts of the object will generally solidify and a partially molten and partially intact object, for example a half-molten PET bottle will be found in the recipient 19. The process can be continued by restarting the device. In this case, the device will start heating the corresponding parts by switching on the heating elements. Once the plastic material in the device is again liquefied, the motor will be switched on again so as to drive the screw of the extruder. The motor/screw may be switched on after an initial time delay of heating, or after a target temperature has been reached at a particular location in the device, for example.

In an embodiment, the method of the invention comprises the step of actively heating said recyclable plastic material by way of heating elements before it enters said extruder and/or while it is present in said extruder.

In an embodiment, the method of the invention comprises the step of heating said extruder 4 at one, two or more positions along a transporting way in said extruder. Preferably, said extruder is heated at two or more longitudinal positions along the extruder. For example, a first position is provided proximate an opening 16 where liquefied plastic material enters said extruder 4, and a second position is provided proximate and extrusion nozzle 17 of said extruder. In the embodiment shown in Fig. 3 and 4, the heating element 7.3 (Fig. 4) is arranged to heat the intermediate chamber 3 as well as the extruder at the longitudinal positions proximate the opening 16. In Fig. 1, the heating element 7.21 can be said to correspond to the bottom part of heating element 7.3 of Fig. 4. In Fig. 3, heating elements 7.22, 7.23, in particular the latter, heats the extruder 4 proximate extrusion nozzle 23.

Not only can the device of the invention do without a grinding or crushing unit, it also allows the treatment of thin, soft or flexible plastics and films, for example plastic bags. In devices using a grinder, such plastics can generally not be processed in a grinder, because they are not properly ground and result in jamming of the grinder. Grinders are useful with relatively hard or brittle plastics, such a PET bottles, but are generally not suitable to diminish plastic in the form of a flexible film, for example. Accordingly, the device of the invention is suitable to process all types of thermoplastic materials, independently of their hardness, for example.

In prior art devices, where granulates are fed into the extruder, any melting taking place upstream the extruder is generally prevented. Such devices may require insulating, for preventing heat generated proximate the nozzle of the extruder to move towards the opening where the used plastic material enters the extruder. In the present device, any insulating material or cooling radiator arranged for preventing melting at the opening 16 of the extruder is preferably absent. A cooling radiator 34 is preferably provided to protect the motor 8 from heat, but the present invention preferably provides for heating the extruder proximate the opening 16 where plastic material to be recycled enters the extruder 4.

In an embodiment, the method of the invention comprises the step of transporting said recyclable plastic material within said extruder 4, wherein said recyclable plastic material is maintained in a liquid state during the entire step of transporting said plastic material within said extruder 4. Preferably, the liquid state is maintained during the entire passage of the plastic material in the extruder, and not only proximate the distal end of the extruder where the extrusion nozzle is provided. The plastic material is preferably liquid when it enters the extruder and stays liquid inside the extruder until it exits the extruder, where the material is allowed to cool down and solidify.

Another advantage of the invention is that it allows for more efficient filtering of volatile components that are released during melting of the plastic materials. Since melting takes place at the bottom of the recipient 19, volatile components can be conveniently filtered by the filter and fan arrangement 26, 31 shown in Figs 1 and 6 and preferably provided in or on the lid 18. In devices where melting takes place inside the extruder, it is not easily possible to capture volatile components.

The invention as disclosed above may be realized as a small unit, adapted for domestic use, which can be driven by electricity from the general power supply, for example 110 V or 220 V. Similarly, the device may be associated with or connected to a 3D printer, such that extruded filament can directly be used for printing 3D objects from the recycled thermoplastic material.

The invention may be also applied at the industrial scale. In an embodiment, the invention relates to an industrial plastic recycling device and process. On the industrial as well as on the domestic scale, the device of the invention allows treatment of recyclable plastic materials in the absence of a grinder, slasher or mulcher or other type of machine for diminishing or granulating the recyclable plastic and providing the plastic in form of granules pellets. While the invention may be used with pellets, it may also be used with undiminished or unpelletized plastic materials. In particular, the invention allows for the recycling and/or treatment of plastic materials such as plastic bags, plastic films or flexible plastics, be it on a domestic or industrial scale. It is noted that plastic bags are problematic also in current industrial recycling plants due to the obstruction of the grinder.

In view of the above, the invention may be used for producing filament suitable for 3D printing, but the invention may also be used for producing extruded plastic material that may be reused in other applications. For example, the recycled, extruded plastic material may be used for producing any object from plastic.

In an embodiment, the device 1 of the invention further comprises an entity 20 that is capable of adjusting the thickness of a filament that is produced. This entity may be referred to a filament controlling entity or thickness-adjusting device 20.

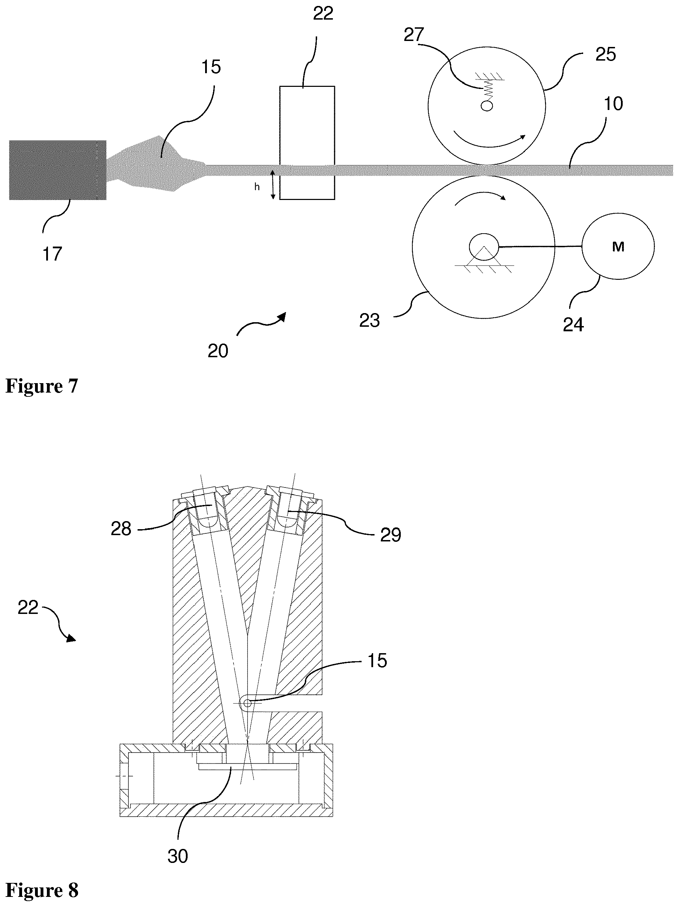

**Figure 7** shows an embodiment of the thickness adjusting device 20. In an embodiment, the thickness-adjusting device 20 comprises a data processing assembly 21 comprising a sensor or sensor arrangement 22, wherein said data processing assembly 21 is configured to determine a thickness of a filament of extruded material 15 after exiting said nozzle 17. The data processing assembly 21 is visible in Fig. 1. Preferably, said data processing assembly 21 is configured to adjust said traction exerted on said extruded material 15, so as to determine and/or adjust a desired thickness of said filament 10.

Figure 7 shows the nozzle 17 of the extruder 4, from which extruded material 15 emerges due to the action of the screw 5. The extruded material 15 may be in the form of a rod or a bulge, for example. The device 20 is arranged so as to exert a traction on the rod 15, so as to produce a filament 10. Preferably, the device is configured so as to adjust the traction so as to obtain a filament of constant thickness, preferably a predetermined or configured thickness.

The device 20 preferably comprises a sensor arrangement 22 comprising a sensor that allows the data processing assembly 21 to determine the thickness of rod 15.

In an embodiment, the device 20 comprises a transporting wheel and/or belt 23 and a motor 24 for driving said wheel and/or belt 23, wherein said wheel and/or belt 23 is arranged so as to be in contact with said filament 10 and to exert a traction force on said filament 10 and/or said extruded material 15. The data processing assembly 21 is configured to control the speed of the motor 24, thereby adjusting the traction exerted by the wheel 23. It is noted that the wheel 23 preferably comprises, on its peripheral surface, a material having a high coefficient of friction, such as to effectively exert a traction on the filament 10. For example, the wheel 23 may have a belt or joint on its peripheral surface, for example made of rubber or any other material having a high coefficient of friction. As mentioned, instead of a wheel 23, a belt may be arranged in such a manner so as to be in contact with the filament 10 and exert a traction thereon, in a direction away from the nozzle 17.

The device 20 shown in Figure 7 further comprises a guiding or counter-pressure wheel 25. In the embodiment shown, the counter wheel 25 arranged in such a manner so as to exert a pressure in the direction of wheel 23. The pressure comes from a resilient member, for example a spring 27. The bearing or seating of the wheel 25 is connected to the resilient member such that the wheel 27 exerts a certain pressure on the filament as the latter is in contact with the motorized wheel 23. In a preferred embodiment, the wheel 25 has a groove extending along its periphery, for example, a V-shaped groove. The filament 10 is preferably received in the groove and pressed against the motorized wheel or belt 23. The pressure from wheel 25 presses the filament 10 onto the wheel or belt 23, and the latter thus efficiently exerts a traction on the filament and thereby transports it in a direction away from nozzle 17.

**Figure 8** shows an embodiment of a sensor arrangement 22 that may be used for determining the thickness of the extruded rod 15 before it gets in contact with the wheels 23, 25. The sensor arrangement shown comprises two light sources, for example two LEDs 28, 29, that are arranged so as to illuminate the rod 15, shown in cross-section in Fig. 8. The rod 15 produces two separate shadows, one for each of the light sources. A light sensor 30 is provided in the arrangement 22 for detecting luminosity depending on said shadows. Thanks to the use of two light sources that are spaced apart and oriented independently towards the rod 15, the data processing assembly 21 can determine the thickness of the rod 15 in the sensor arrangement 22, for example by triangulation. Depending on the determined thickness, the data processing assembly acts on the motor 24 for adjusting the speed of the wheel 23 if appropriate, thereby adjusting the traction exerted on the rod. By increasing the traction, the thickness of filament 10 can be reduced, and by lowering traction the thickness of the filament is increased.

The device 20 is thus preferably configured to control and determine the thickness of the filament 10 produced from the extruded plastic material 15. This is possible because the thickness of the diameter of the rod 15 and the speed of the motor 24 can be controlled in real time, and the volume or quantity of the extruded material 15 can thus also be determined in real time. One advantage of the intelligent, self-regulating conception of the device 20 is that it allows the treatment of different plastic materials in the device 1, while obtaining a filament having the desired thickness, without need of reconfiguring the device. The device as shown allows obtaining plastic filament of a desired, determined thickness, independently of the plastic material that is treated (PET, PE, etc), and also independently of the speed of the screw 5 or of the extruding speed in general.

In some embodiment, the present invention also envisages that the filament controlling entity 20 also controls the parameters such as speed of the extruder 4, thereby allowing to control the filament thickness by acting on the extruder.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A device (1) adapted for domestic and/or office use for producing a filament (10, 15) suitable for 3D printing from recyclable plastic materials, the device comprising:
- a funnel (2),
- one or more first heating elements (7.1) connected to said funnel for heating and liquefying a recyclable plastic material contained in said funnel (2),
- an extruder (4) comprising: a tube (6), a screw (5) arranged in said tube (6), and a nozzle (17) where extruded material (15) produced from said recyclable plastic material can exit said extruder (4), said tube (5) comprising an opening (16) in communication with said funnel (2) for receiving liquefied plastic material,
- a motor (8) for driving said screw (5),
- one or more second heating elements (7.2) connected to said tube (6) for heating said plastic material in said tube (6).

2. The device of any one of claims 1 or 2, which lacks a grinding or crushing unit for grinding or crushing recyclable plastic materials before it enters said extruder (4).

3. The device of any one of the preceding claims, which comprises an intermediate chamber (3) arranged between said funnel (2) and said opening (16) provided in said tube (4), wherein said intermediate chamber (3) provides a channel for liquefied recyclable plastic material.

4. The device of claim 3, comprising one or more third heating elements (7.3) connected to said intermediate chamber (3) for heating and/or maintaining an elevated temperature of said recyclable plastic material in said intermediate chamber (3).

5. The device of any one of the preceding claims, which comprises an inner surface that is surface treated and/or that comprises a coating.

6. The device of claim 5, wherein one or more selected from a surface of said funnel (2), of an optional intermediate chamber (3), and of a tube (6) comprises a coating, preferably selected to be appropriate to reduce the coefficient of friction of said surface.

7. The device (1) of any one of the preceding claims, comprising heating elements (7.1, 7.21, 7.22, 7.23, 7.3) arranged so as to keep said plastic material in a liquefied state from said funnel (2) to said extruder (4).

8. The device (1) of any one of the preceding claims, wherein said recyclable plastic materials includes plastic bags, for example plastic bags produced from polyethylene (PE).

9. The device of any one of the preceding claims, wherein said funnel (2) comprises a bottom opening (9), which is positioned vertically above said extruder (4) and in particular vertically above said opening (16) in said tube (4), such that a liquefied plastic material can be conducted to enter said extruder (4) through said opening (16) by the force of gravity.

10. The device of any one of the preceding claims, further comprising a filament control entity (20) arranged for receiving extruded material (15) that exits said extruder (4), said filament control entity (20) being configured to apply a traction on said extruded material (15) so as to form a filament (10) having a desired thickness.

11. The device of claim 10, wherein said filament control entity (20) comprises a data processing assembly (21) comprising a sensor (22), wherein said data processing assembly (21) is configured to determine a thickness of a filament of extruded material (15) after exiting said nozzle (17), and to adjust the traction exerted on said extruded material (15), so as to determine and/or adjust a desired thickness of said filament (10).

12. A method for producing a filament (10, 15) suitable for 3D printing from recyclable plastic materials, the method comprising:
- providing a recipient (2, 19) for receiving recyclable plastic material;
- heating and liquefying said recyclable plastic material so as to obtain a liquefied plastic material;
- allowing said liquefied plastic material to enter an extruder (4);
- extruding said liquefied plastic material through said extruder (4) so as to obtain extruded plastic material (15);
- forming a filament (10) from said extruded plastic material (15).

13. The method of claim 12, which lacks a step of grinding and/or crushing recyclable plastic material, in particular after it is received in said recipient (2, 19).

14. The method of any one of claims 12 or 13, wherein during said step of allowing said liquefied plastic material to enter said extruder, said liquefied plastic material is transported under the force of gravity and/or enters said extruder due to the force of gravity.

15. The method of any one of claims 12-14, which lacks a step of actively transporting liquefied plastic material to said extruder.

16. The method of any one of claims 12-15, comprising the step of actively heating said recyclable plastic material by way of heating elements before it enters said extruder and while it is present in said extruder.

17. The method of any one of claims 12-16, comprising heating said extruder (4) at one, two or more positions along a transporting way in said extruder, a first position, proximate an opening (16) where liquefied plastic material enters said extruder (4), and a second position, proximate and extrusion nozzle (17) of said extruder.

18. The method of any one of claims 12-17, comprising the step of transporting said recyclable plastic material in said extruder (4), wherein said recyclable plastic material is maintained in a liquid state during the entire step of transporting said plastic material in said extruder (4).

19. A device (20) for controlling the thickness of extruded plastic filament (15) suitable for 3D printing, the device (20) being configured to apply a traction on said extruded material (15) so as to form a filament (10) having a desired thickness.

20. The device of claim 19, comprising a data processing assembly (21) comprising a sensor (22), wherein said data processing assembly (21) is configured to determine a thickness of a filament of extruded material (15) after exiting said nozzle (17), wherein said data processing assembly (21) is further configured to adjust said traction exerted on said extruded material (15), so as to determine and/or adjust a desired thickness of said filament (10).

21. The device of claim 19 or 20, comprising a transporting wheel or belt (23) and a motor (24) for driving said wheel or belt (23), wherein said wheel or belt (23) is arranged so as to be in contact with said filament (10) and to exert a traction force on said filament (10) and/or said extruded material (15).

22. A device (1) for treating thermoplastic and/or recyclable plastic materials, the device comprising a funnel and/or hopper (2, 19), an extruder (4) comprising: a tube (6), a screw (5) arranged in said tube, and a nozzle (17) where extruded material (15) produced from said recyclable plastic material exits said extruder (4), said tube (6) comprising an opening (16) in communication with said funnel (2) and/or hopper (2, 19) for receiving plastic material, and one or more heating elements (7.1, 7.21, 7.22, 7.3) for heating said plastic material in said funnel (2), hopper (2, 19) and/or in said tube (6).
